Europäisches Patentamt

European Patent Office

Office européen des brevets

(19)

(11) Publication number: **0 155 184 B1**

(12) **EUROPEAN PATENT SPECIFICATION**

(45) Date of publication of patent specification: **09.09.92**

(51) Int. Cl.5: **H01B 5/10, G02B 6/44**

(21) Application number: **85301747.3**

(22) Date of filing: **13.03.85**

(54) **An improved flexible elongate body.**

(30) Priority: **14.03.84 GB 8406636**

(43) Date of publication of application:
**18.09.85 Bulletin 85/38**

(45) Publication of the grant of the patent:
**09.09.92 Bulletin 92/37**

(84) Designated Contracting States:
**AT BE DE FR IT NL SE**

(56) References cited:
**EP-A- 0 129 438**
**DE-A- 2 701 704**
**FR-A- 2 404 236**
**GB-A- 1 568 546**
**US-A- 4 359 598**

**PATENT ABSTRACTS OF JAPAN, vol. 7, no.
113 (P-197)[1258], 18th May 1983; & JP-A-58
33 202 (FURUKAWA DENKI KOGYO K.K.)
26-02-1983**

(73) Proprietor: **BICC Public Limited Company
21, Bloomsbury Street
London, WC1B 3ON(GB)**

(72) Inventor: **Taylor, John Edward
49 Golden Ball Lane Pinkneys Green
Maidenhead Berkshire(GB)**
Inventor: **Keene, Ian William
59, Selworthy Road Battersea
London, SWII 3NG(GB)**

(74) Representative: **Ross Gower, Edward Lewis et
al
BICC plc Patents & Licensing Department
Ouantum House Maylands Avenue
Hemel Hempstead, Herts. HP2 4SJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

EP 0 155 184 B1

## Description

This invention relates to overhead flexible electric conductors of the kind which comprise one or more than one layer of bare elongate elements of electrically conductive metal or metal alloy and which are adapted to be freely supported from spaced supports in long lengths.

In the Complete Specification of our British Patent No: 1598438 there is described and claimed an overhead flexible electric conductor comprising at least one layer of helically wound bare elongate elements of metal or metal alloy, at least one elongate compartment within and extending throughout the length of the conductor and, loosely housed in the elongate compartment or at least one of the elongate compartments, at least one separate optical fibre and/or at least one optical bundle.

FR-A-2404236 describes and illustrates an optical cable comprising a metal tube in the bore of which optical fibres are loosely housed, the bore having therein longitudinally spaced plugs of, or being substantially filled with, a viscous petroleum product. The metal tube has a plurality of annular or helically extending corrugations which render the optical cable extendable. The tube may be made of a metal of good electrical conductivity, e.g. copper or aluminium, or it may be made of a metal of good mechanical resistance, e.g. steel.

In DE-A-2701704 there is described and illustrated an optical element comprising an optical fibre encapsulated within a tight fitting coating which is of such materials that the coating imparts to the optical fibre a permanent helical shape caused by elastic tensions established in the coating which vary over the cross-sectional area of the element. The coating consists of two types of material with different contraction tendency each constituting a sector of the coating of approximately semi-annular shape in transverse cross-section; the materials may extend parallel with the fibre axis or in an oblong helix which may have constant or varying pitch with a constant or varying helical direction. The optical element is suitable for placing in a tubular jacket to form an optical transmission means.

It is an object of the present invention to provide an improved overhead flexible electric conductor.

According to the invention, the improved overhead flexible electric conductor comprises at least one layer of helically wound bare elongate elements of metal or metal alloy, at least one elongate compartment within and extending throughout the length of the conductor and, loosely housed in the elongate compartment or at least one of the elongate compartments, at least one optical fibre element comprising a flexible tube having a bore in which at least one optical fibre is so loosely housed that, when the tube is bent or otherwise flexed, the or each optical fibre is free to move to a limited extent transversely of and with respect to the tube, wherein the flexible tube is a longitudinally continuous structure of a plastics material and has been resiliently set in such a form that the central longitudinal axis of the tube follows a longitudinally extending path of smoothly curved undulations whose axes of curvature lie parallel to one another and substantially normal to the longitudinal axis of the tube and whose radii of curvature are substantially greater than the maximum transverse dimension of the tube, the arrangement being such that, when the resiliently set tube is subjected to a longitudinally applied tensile force, the tube will straighten in a lengthwise direction against the action of its resilient set thereby to reduce the tensile force applied to the or each optical fibre and, when the tensile force is removed, the tube will return under the action of its resilient set towards its original form.

By virtue of the smoothly curved undulations, when the resilient set tube is subjected to a longitudinally applied tensile force, the tube will straighten against the action of its resilient set; that is to say, the length of the radii of the smoothly curved undulations will gradually increase.

The flexible tube of the optical fibre element may be of circular or non-circular cross-section and, in each case, preferably the radial thickness of the tube wall is substantially constant at all transverse cross-sections of the tube. Where the flexible tube is of non-circular cross-section, preferably it has a transverse cross-section of elongate form, e.g. of an elongate form having two major parallel sides joined by ends of approximately semi-circular shape, and in this case preferably the flexible tube is resiliently set in such a form that the central longitudinal axis of the tube follows a path of smoothly curved undulations whose axes of curvature lie substantially parallel to the major transverse axes of the flexible tube.

The or each optical fibre loosely housed in the resiliently set flexible tube preferably is unsupported but, in some circumstances, two or more optical fibres of the optical fibre element may be component parts of at least one optical fibre ribbon structure loosely housed in the bore of the tube. In this case, the optical fibres, and if desired one or more than one flexible elongate reinforcing element, of an optical fibre ribbon structure preferably are arranged side by side and are wholly or partially embedded in a flexible elongate body of plastics material or are arranged side by side and are secured to one major surface of a flexible tape.

In all cases, the flexible tube of the optical fibre element may be substantially filled throughout its length with a water-impermeable medium of a grease like nature which is of such a consistency that the or each optical fibre or the or each optical fibre ribbon structure is free to move relative to the tube when the overhead flexible conductor vibrates, oscillates or is otherwise flexed. The greasy water-impermeable medium may consist of, or may comprise as a major constituent, silicone gel.

The optical fibre element as above described is the subject of our co-pending European Patent Application No: 85301746.5 (Publication No: 0157516) filed on the same day as the present application.

By virtue of being housed loosely in the elongate compartment, limited relative movement between the or each optical fibre element and the overhead flexible conductor can take place when the conductor vibrates, oscillates or is otherwise flexed as may, for example, occur in the case when the overhead flexible conductor is subjected to winds. Limited relative movement between the or each optical fibre element and the overhead flexible conductor can also occur when the conductor is subjected to a changing tensile load during and after its installation due to forces imposed on it by winches and brakes, etc. which are used in tensioning the conductor to obtain a predetermined sagging condition; after installation, changes in tensile load in the conductor can also occur due to changes in external loading and in temperature. Limited relative movement between the or each optical fibre element and the overhead flexible conductor can also occur whilst the conductor is in service and creep gives rise to non-elastic extension of the conductor. In any of these situations, in the unlikely event that a tensile force applied to the overhead flexible conductor may be transferred, at least in part, to the or any loosely housed optical fibre element, the flexible tube of the element will straighten in a lengthwise direction against the action of its resilient set thereby to reduce any tensile force that might otherwise be applied to the or any optical fibre and, when the tensile force is removed, the tube will return under the action of its resilient set towards its original form.

In one preferred aspect of the invention, an elongate compartment is within and extends throughout the length of a substantially circumferentially rigid central core and the or each layer of helically wound bare elongate elements of metal or metal alloy surrounds the central core. In one preferred embodiment of this aspect of the invention, the central core is a single elongate member having a central bore which constitutes the elongate compartment. The single elongate member initially may be of substantially U-shaped transverse cross-section, one or each of the limbs of the U being folded inwardly so that the gap between the free ends of the limbs is at least partially closed, the space between the limbs and the base of the U constituting the elongate compartment; alternatively, the single elongate member initially may be a tape of metal or metal alloy transversely folded to form a tube, the abutting longitudinally extending edges of the tape being welded or otherwise secured together. In all cases, preferably the central core is of substantially circular transverse cross-section.

Alternatively, the central core may be in the form of any one or more of the optional constructions described and illustrated in the Complete Specification of our British Patent No: 1598438.

In another aspect of the invention, the central core may consist of two separately formed parts comprising an inner solid elongate member of metal or metal alloy having in its outer surface at least one longitudinally extending recess and, surrounding the inner elongate member, a longitudinally applied transversely folded tape of metal or metal alloy, which tape overlies the or each longitudinally extending recess to form an elongate compartment.

In a further aspect of the present invention, the central core is of aluminium or an aluminium-based alloy; at least one layer of bare elongate elements of steel surrounds the central core; and at least one substantially circumferentially continuous outer layer of aluminium or an aluminium-based alloy surrounds the layer or layers of steel bare elongate elements, aluminium or aluminium-based alloy of the central core and/or of the outer layer at least partially filling interstices between the steel bare elongate elements. In this case, the central core may comprise at least one layer of bare elongate elements of aluminium or an aluminium-based alloy, each element having a transverse cross-section approximating to a sector of an annulus or having a transverse cross-section of such a shape that, when the overhead flexible conductor is in tension, said element is in inter-facial engagement with adjacent bare elongate elements.

In all cases, those parts of the elongate compartment not occupied by the optical fibre element or elements may be substantially filled with a silicone gel or other water-impermeable medium of a grease like nature, the silicone gel or other greasy water-impermeable medium being of such a consistency that the or each optical fibre element is free to move relative to the overhead flexible conductor when the conductor vibrates, oscillates or is otherwise flexed. Another greasy water-impermeable medium may consist of, or may comprise as a major constituent, petroleum jelly.

When the improved overhead flexible conductor is an earth conductor of an overhead electric transmission or distribution system, in some circumstances an electric current flowing for a limited period along the conductor, as may occur as a result of a fault or lightning, may be of such a value that there is the risk that heat generated during passage of the current will be conducted to the optical fibre element and to the or any optical fibre and will result in damage to the optical fibre element or such damage to the optical fibre that its light-transmission efficiency is reduced to an undesirable extent. For example, the generated heat may cause plastics material of the flexible tube of the optical fibre element to soften and exert such pressure on the or any loosely housed optical fibre as to reduce its light-transmission efficiency to an undesirable extent.

Accordingly, in some circumstances, the flexible tube of the or each optical fibre element may be of polyethersulphone, polyetherimide or other plastics material capable of withstanding temperatures in the order of 300°C for a short period and/or a layer of thermally insulating material may be housed in the elongate compartment and surround the optical fibre element or elements. Preferably, the thermally insulating layer is a circumferentially continuous layer which is bonded or otherwise adheres to the boundary surface of the elongate compartment. The layer of thermally insulating material may be firmly bonded to substantially the whole of the boundary surface area of the elongate compartment, or the layer of thermally insulating material may be bonded to mutually spaced portions of the boundary surface area, any air between the thermally insulating layer and the boundary surface serving as additional thermal insulation. The layer of thermally insulating material is preferably a coating of plastics thermally insulating material such as silicone rubber, polytetrafluoroethylene and other fluoroethylene polymers and co-polymers, polyetheretherketone, polycarbonates, polysulphones, polyesters and the aromatic polyamide sold under the Registered Trade Mark "Kevlar". For enhanced thermal insulation, these plastics materials may be in cellular form.

The invention is further illustrated by a description, by way of example, of three preferred forms of optical fibre element suitable for use in an overhead flexible electric conductor and of four preferred forms of overhead flexible electric conductor incorporating an optical fibre element, with reference to the accompanying drawings, in which:-

Figures 1 to 3 are isometric diagrammatic views, drawn on an enlarged scale, of the three forms of optical fibre element, and
Figures 4 to 7 are transverse cross-sectional views of the four preferred forms of overhead flexible electric conductor.

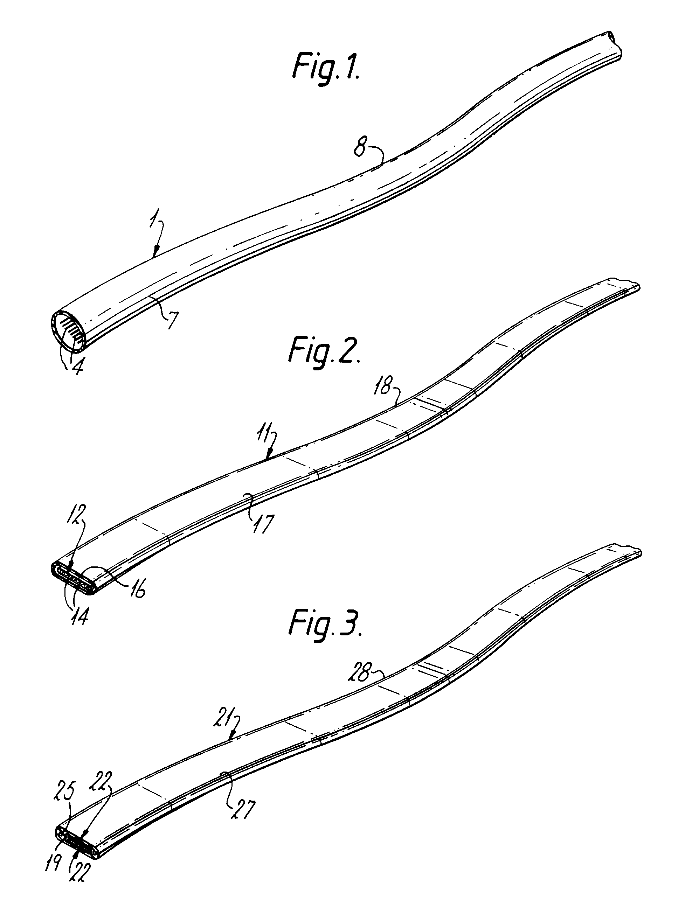

Referring to Figure 1, the first form of optical fibre element 1 comprises eight optical fibres 4 each of which has an overall diameter of 250 $\mu$m and which is loosely housed in the bore of a flexible tube 7 of orientated polyethylene terephthalate, which tube is of substantially constant circular cross-section throughout its length and has a radially wall thickness of 0.4mm and an internal diameter of 1.8mm. Each of the optical fibres 4 may have a coating of a colour different from that of a coating on each of the other optical fibres. The flexible central longitudinal axis of the tube, and hence the tube, 7 is resiliently set in such a form that the tube follows a path of smoothly curved undulations 8 which have radii of curvature of approximately 60mm and whose axes of curvature lie parallel to one another and substantially normal to the longitudinal axis of the tube.

The second form of optical fibre element 11 shown in Figure 2 comprises an optical fibre ribbon structure 12 comprising eight optical fibres 14 arranged side by side and embedded in an elongate body 16 of silicone acrylate. Each of the optical fibres 14 has an overall diameter of 250 $\mu$m and may have a coating of a colour different from that of the coating on each of the other optical fibres. The optical fibre ribbon structure 12 is loosely housed in the bore of a flexible tube 17 which is made of orientated polyethylene terephthalate and which has a transverse cross-section of an elongate form having two major parallel sides joined by ends of approximately semi-circular shape. The flexible tube 17 has a substantially constant wall thickness of 0.3mm, an internal major transverse dimension of 2.5mm and internal minor transverse dimension of 1.0mm; the optical fibre ribbon structure 12 has a major transverse dimension of 2.2mm and a minor transverse dimension of 0.3mm. The flexible tube 17 is resiliently set in such a form that the central longitudinal axis of the tube, and hence the tube, follows a path of smoothly curved undulations 18 which have radii of curvature of approximately 60mm and whose axes of curvature lie substantially parallel to the major transverse axes of the flexible tube.

Referring to Figure 3, the third form of optical fibre element 21 comprises an elongate body 27 which is made of a thermoplastics material and which has a transverse cross-section of elongate form having two major parallel sides joined by ends of approximately semi-circular shape. The elongate body 27 has a major transverse dimension of 6.0mm and a minor transverse dimension of 2.0mm. Extending throughout the length of the elongate body 27 is a bore 29 which has a transverse cross-section of similar shape to that of the body and, embedded in the body on opposite sides of the bore 29, are a pair of resilient copper wires 25. Loosely housed in the bore 29 are two optical fibre ribbon structures 22 each comprising eight optical fibres 24 arranged side by side and embedded in an elongate body 26 of silicone acrylate, each of which optical fibres has an overall diameter of 250 μm. Each copper wire 25 is set in such a form that the central longitudinal axis of the elongate body 27, and hence the body itself, follows a path of smoothly curved undulations 28 which have radii of curvature of approximately 60mm and whose axes of curvature lie parallel to one another and to the major transverse axes of the elongate body.

When the optical fibre elements 1, 11, 21 shown in Figures 1 to 3 are subjected to a tensile force, the flexible tube 7 and 17 and the elongate body 27 will tend to straighten in a lengthwise direction against the action of the resilient set in the tubes or in the copper wires 25 thereby reducing the tensile force that would otherwise be applied to the optical fibres 4 and optical fibre ribbons 12 and 22. After the tensile force is removed, the resilient set in the tubes 7 and 17 and in the copper wires 25 will cause the optical fibre elements 1, 11, 21 to return towards their original undulating form.

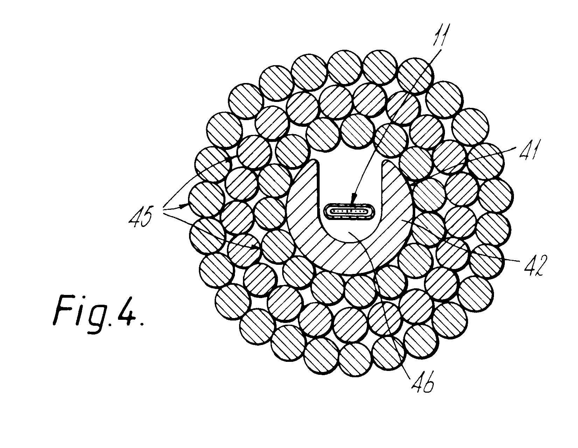

The overhead flexible electric conductor shown in Figure 4 comprises a central core 41 constituted by a single extruded elongate aluminium member 42 of substantially U-shaped transverse cross-section, the space 46 between the limbs of the U constituting an elongate compartment. The central core 41 is surrounded by three layers 45 of helically wound round wires of aluminium-based alloy, the directions of lay of adjacent layers being of opposite hand. Loosely housed in the elongate compartment 46 is an undulating optical fibre element 11 as shown in Figure 2.

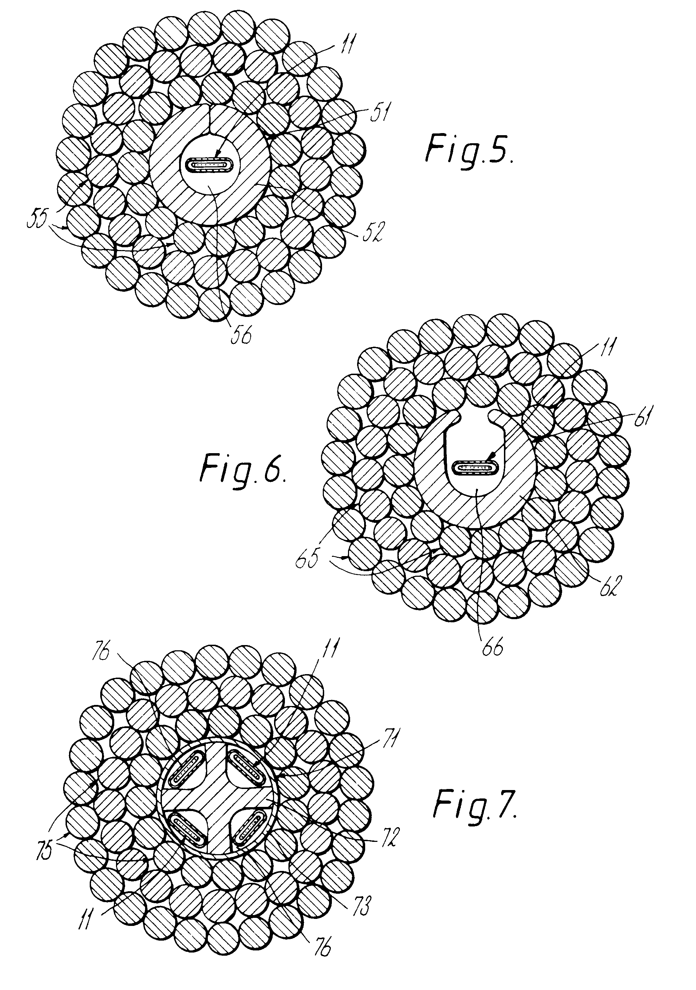

The overhead flexible electric conductors shown in Figures 5 and 6 are similar in construction to the overhead flexible electric conductor shown in Figure 4 except for the form of the central core and, for convenience, components of the flexible conductors shown in Figures 5 and 6, respectively, that are similar to those of the overhead conductor shown in Figure 4 have been given references greater by 10 and by 20 than the references of the corresponding components of the flexible conductor shown in Figure 4. In the overhead electric conductor shown in Figure 5, the central core 51 is a tube 52 formed by transversely folding a strip of aluminium-based alloy. In the flexible conductor shown in Figure 6, the central core 61 is constituted by a single extruded elongate aluminium member 62 of substantially U-shaped cross-section, the gap between the free ends of the limbs of the U being partially closed to retain the undulating optical fibre element 11 in the elongate compartment 66.

The overhead flexible electric conductor shown in Figure 7 has a central core 71 consisting of two separately formed parts comprising an inner extruded elongate member 72 of aluminium having in its outer surface four circumferentially spaced, longitudinally extending recesses 76 and, surrounding the inner elongate member, a longitudinally applied transversely folded tape 73 of aluminium, which tape overlies the longitudinally extending recesses to form circumferentially spaced elongate compartments. Loosely housed in each of the elongate compartments 76 is an undulating optical fibre element 11 as shown in Figure 2. The central core 71 is surrounded by three layers 75 of helically wound round wires of aluminium-based alloy, the directions of lay of adjacent layers being of opposite hand.

In each of the flexible conductors shown in Figures 4 to 7, the or each elongate compartment may be substantially filled throughout its length with a silicone gel or other greasy water-impermeable medium.

## Claims

1. An overhead flexible electric conductor comprising at least one layer (45,55,65,75) of bare elongate elements of metal or metal alloy, helically wound around at least one elongate compartment (46,56,66,76) extending throughout the length of the conductor and, loosely housed in the elongate compartment or at least one of the elongate compartments, at least one optical fibre element (1,11,21) comprising a flexible tube (7,17,27) having a bore in which at least one optical fibre (4,14,24) is so loosely housed that, when the tube is bent or otherwise flexed, the or each optical fibre is free to move to a limited extent transversely of and with respect to the tube, characterised in that the flexible tube of the optical fibre element is a longitudinally continuous structure of a plastics material and has been resiliently set in such a form that the central longitudinal axis of the tube follows a longitudinally extending path of smoothly curved undulations (8,18,28) whose axes of curvature lie parallel to one another and substantially normal to the longitudinal axis of the tube and whose radii of curvature are substantially greater than the maximum transverse dimension of the tube, the arrangement being such that, when the resiliently set plastics tube is subjected to a longitudinally applied tensile force, the tube will straighten in a lengthwise direction against the action of its resilient set thereby to reduce the tensile force applied to the or each optical fibre and, when the tensile force is removed, the tube will return under the action of its resilient set towards its original form.

2. An overhead flexible electric conductor as claimed in Claim 1, characterised in that the flexible tube (17) of the optical fibre element is of non-circular cross-section and the radial thickness of the tube wall is substantially constant at all transverse cross-sections of the tube.

3. An overhead flexible electric conductor as claimed in Claim 1, characterised in that the flexible tube (17) of the optical fibre element has a transverse cross-section of an elongate form having two major parallel sides joined by ends of approximately semi-circular shape, the flexible tube being resiliently set in such a form that the axes of curvature of the smoothly curved undulations (18) lie substantially parallel to the major transverse axes of the flexible tube.

4. An overhead flexible electric conductor as claimed in any one of the preceding Claims, characterised in that the flexible tube (7,17) of the optical fibre element is made of orientated polyethylene terephthalate.

5. An overhead flexible electric conductor as claimed in any one of Claims 1 to 3, characterised in that the flexible tube (7,17) of the optical fibre element is made of polyethersulphone or of polyetherimide.

6. An overhead flexible electric conductor as claimed in any one of Claims 1 to 3, characterised in that the flexible tube (27) of the optical fibre element has embedded in the tube wall at mutually spaced positions a plurality of resilient elongate reinforcing elements (25), each of which is so resiliently set as to cause the central longitudinal axis of the tube to follow the path of smoothly curved undulations.

7. An overhead flexible electric conductor as claimed in any one of the preceding Claims, characterised in that the or each optical fibre (4) loosely housed in the resiliently set flexible tube (7) of the optical fibre element is unsupported.

8. An overhead flexible electric conductor as claimed in any one of Claims 1 to 6, characterised in that two or more optical fibres (14,24) are component parts of at least one optical fibre ribbon structure (12,22) loosely housed in the bore of the resiliently set flexible tube of the optical fibre element.

9. An overhead flexible electric conductor as claimed in Claim 8, characterised in that the or each optical fibre ribbon structure of the optical fibre element comprises two or more optical fibres and one or more than one flexible elongate reinforcing element arranged side by side and wholly or partially embedded in a flexible elongate body of plastics material or arranged side by side and secured to one major surface of a flexible tape.

10. An overhead flexible electric conductor as claimed in any one of the preceding Claims, characterised in that the elongate compartment is the bore of a substantially circumferentially rigid central core (41,51,61,71) which is surrounded by the layer or layers (45,55,65,75) of helically wound bare elongate elements of metal or metal alloy.

11. An overhead flexible electric conductor as claimed in Claim 10, characterised in that the central core is a single extruded elongate member having a central bore which constitutes the elongate compartment.

12. An overhead flexible electric conductor as claimed in Claim 10, characterised in that the central core (41) is a single elongate member (42) of metal or metal alloy of substantially U-shaped transverse cross-section, the space (46) between the limbs and the base of the U constituting the elongate compartment.

13. An overhead flexible electric conductor as claimed in Claim 12, characterised in that one or each of the limbs of the U (52,62) is folded inwardly so that the gap between the free ends of the limbs is at least partially closed.

14. An overhead flexible electric conductor as claimed in Claim 10, characterised in that the central core is a longitudinally extending tape of metal or metal alloy which is transversely folded to form a tube, the abutting longitudinally extending edges of the tape being welded or otherwise secured together.

15. An overhead flexible electric conductor as claimed in Claim 10, characterised in that the central core (71) consists of two separately formed parts comprising an inner solid elongate member (72) of metal or metal alloy having in its outer surface at least one longitudinally extending recess (76) and, surrounding the inner elongate member, a longitudinally applied transversely folded tape of metal or metal alloy, which tape overlies the or each longitudinally extending recess to form an elongate compartment.

16. An overhead flexible electric conductor as claimed in any one of Claims 10 to 15, characterised in that the central core (41,51,61,71) is of substantially circular transverse cross-section.

**Patentansprüche**

1. Flexibles, elektrisches Leiterseil mit mindestens einer Lage (45, 55, 65, 75) blanker, länglicher Elemente aus Metall oder einer Metallegierung, die spiralförmig um mindestens eine Langkammer (46, 56, 66, 76) gewunden sind, welche sich über die Gesamtlänge des Leiterseils erstreckt, und mit mindestens einem lose in der Langkammer oder in mindestens einer der Langkammern untergebrachten faseroptischen Bauelement (1, 11, 21), das einen flexiblen Schlauch (7, 17, 27) mit einer Bohrung aufweist, in der mindestens ein Lichtleiter (4, 14, 24) lose so untergebracht ist, daß beim Verbiegen oder anderweitigen Knicken des Schlauchs der oder jeder Lichtleiter in gewissem Maße quer und relativ zum Schlauch frei beweglich ist, dadurch gekennzeichnet, daß der flexible Schlauch des faseroptischen Bauelements eine in Längsrichtung durchgehende Struktur aus einem Kunststoff ist und elastisch auf eine solche Form eingestellt wurde, daß die Mittenlängsachse des Schlauchs einem sich in Längsrichtung erstreckenden Verlauf leicht gerundeter Wellungen (8, 18, 28) folgt, deren Krümmungsachsen parallel zueinander und im wesentlichen senkrecht zur Schlauchlängsachse verlaufen und deren Krümmungsradien im wesentlichen größer als die maximale Schlauchquerabmessung sind, wobei die Anordnung so ist, daß, wenn der elastisch verformte Kunststoffschlauch einer in Längsrichtung wirkenden Zugkraft ausgesetzt wird, sich der Schlauch der Länge nach entgegen der Wirkung seiner elastischen Einstellung geraderichtet und damit die auf den oder jeden Lichtleiter aufgebrachte Zugkraft verringert, und daß bei Wegfall der Zugkraft der Schlauch unter der Wirkung seiner elastischen Einstellung in seine ursprüngliche Form zurückkehrt.

2. Flexibles, elektrisches Leiterseil nach Anspruch 1, dadurch gekennzeichnet, daß der flexible Schlauch (17) des faseroptischen Bauelements einen nicht kreisförmigen Querschnitt hat und die radiale Dicke der Schlauchwand an allen Schlauchquerschnitten im wesentlichen konstant ist.

3. Flexibles, elektrisches Leiterseil nach Anspruch 1, dadurch gekennzeichnet, daß der flexible Schlauch (17) des faseroptischen Bauelements einen Querschnitt von länglicher Form mit zwei parallelen Hauptseiten hat, die durch Enden mit annähernd halbrunder Form verbunden sind, wobei der flexible Schlauch elastisch auf eine solche Form eingestellt ist, daß die Krümmungsachsen der leicht gerundeten Wellungen (18) im wesentlichen parallel zu den Hauptquerachsen des flexiblen Schlauchs verlaufen.

4. Flexibles, elektrisches Leiterseil nach einem der vorstehenden Ansprüche, dadurch gekennzeichnet, daß der flexible Schlauch (7, 17) des faseroptischen Bauelements aus orientiertem Polyethylenterephthalat besteht.

5. Flexibles, elektrisches Leiterseil nach einem der Ansprüche 1 bis 3, dadurch gekennzeichnet, daß der flexible Schlauch (7, 17) des faseroptischen Bauelements aus Polyethersulfon oder Polyetherimid besteht.

6. Flexibles, elektrisches Leiterseil nach einem der Ansprüche 1 bis 3, dadurch gekennzeichnet, daß in der Schlauchwand des flexiblen Schlauchs (27) des faseroptischen Bauelements an zueinander beabstandeten Stellen mehrere elastische, längliche Verstärkungselemente (25) eingebettet sind, die jeweils so elastisch eingestellt sind, daß die Mittenlängsachse des Schlauchs dem Verlauf leicht gerundeter Wellungen folgt.

7. Flexibles, elektrisches Leiterseil nach einem der vorstehenden Ansprüche, dadurch gekennzeichnet, daß der oder jeder lose im elastisch eingestellten, flexiblen Schlauch (7) des faseroptischen Bauelements untergebrachte Lichtleiter (4) selbsttragend ist.

8. Flexibles, elektrisches Leiterseil nach einem der Ansprüche 1 bis 6, dadurch gekennzeichnet, daß zwei oder mehr Lichtleiter (14, 24) Bestandteile von mindestens einer Lichtleiter-Bandstruktur (12, 22) sind, die lose in der Bohrung des elastisch eingestellten, flexiblen Schlauchs des faseroptischen Bauelements untergebracht ist.

9. Flexibles, elektrisches Leiterseil nach Anspruch 8, dadurch gekennzeichnet, daß die oder jede Lichtleiter-Bandstruktur zwei oder mehr Lichtleiter und ein oder mehr als ein flexibles längliches Verstärkungselement aufweist, welche nebeneinander angeordnet und ganz oder teilweise in einem flexiblen, länglichen Kunststoffkörper eingebettet oder nebeneinander angeordnet und an einer Hauptfläche eines flexiblen Streifens befestigt sind.

10. Flexibles, elektrisches Leiterseil nach einem der vorstehenden Ansprüche, dadurch gekennzeichnet, daß die Langkammer die Bohrung eines im wesentlichen über den Umfang starren Mittelkerns (41, 51, 61, 71) ist, der von der Lage oder den Lagen (45, 55, 65, 75) spiralförmig gewundener, blanker, länglicher Elemente aus Metall oder einer Metallegierung umgeben ist.

11. Flexibles, elektrisches Leiterseil nach Anspruch 10, dadurch gekennzeichnet, daß der Mittelkern ein einzelnes stranggepreßtes, längliches Bauglied mit einer Mittelbohrung ist, welche die Langkammer bildet.

12. Flexibles, elektrisches Leiterseil nach Anspruch 10, dadurch gekennzeichnet, daß der Mittelkern (41) ein einzelnes stranggepreßtes, längliches Bauglied (42) aus Metall oder einer Metallegierung mit im wesentlichen U-förmigem Querschnitt ist, wobei der Raum (46) zwischen den Schenkeln und der Basis des U die Langkammer bildet.

13. Flexibles, elektrisches Leiterseil nach Anspruch 12, dadurch gekennzeichnet, daß ein oder jeder der U-Schenkel (52, 62) so nach innen abgekantet ist, daß die Lücke zwischen den freien Enden der Schenkel mindestens teilweise geschlossen ist.

14. Flexibles, elektrisches Leiterseil nach Anspruch 10, dadurch gekennzeichnet, daß der Mittelkern ein in Längsrichtung verlaufender Streifen aus Metall oder einer Metallegierung ist, der zur Bildung eines Schlauchs quergefaltet ist, wobei die aneinanderstoßenden, in Längsrichtung verlaufenden Kanten des Streifens verschweißt oder auf andere Weise aneinander befestigt sind.

15. Flexibles, elektrisches Leiterseil nach Anspruch 10, dadurch gekennzeichnet, daß der Mittelkern (71) aus zwei getrennt geformten Teilen mit einem festen, länglichen Innenelement (72) aus Metall oder einer Metallegierung besteht, das in seiner Außenfläche mindestens eine in Längsrichtung verlaufende Aussparung (76) und einen in Längsrichtung aufgebrachten, quergefalteten Streifen aus Metall oder einer Metallegierung aufweist, wobei der Streifen das längliche Innenelement umgibt und die oder jede in Längsrichtung verlaufende Aussparung überdeckt, um eine Langkammer zu bilden.

16. Flexibles, elektrisches Leiterseil nach einem der Ansprüche 10 bis 15, dadurch gekennzeichnet, daß der Mittelkern (41, 51, 61, 71) einen im wesentlichen kreisförmigen Querschnitt hat.

**Revendications**

1. Conducteur électrique aérien flexible comprenant au moins une couche (45, 55, 65, 75) d'éléments allongés nus, en métal ou en alliage de métaux, enroulés hélicoïdalement autour d'au moins un compartiment allongé (46, 56, 66, 76) s'étendant sur toute la longueur du conducteur et, logé avec du jeu dans le compartiment allongé ou dans au moins un des compartiments allongés, au moins un élément formant fibre optique (1, 11, 21) comprenant un tube flexible (7, 17, 27) dans le canal central duquel au moins une fibre optique (4, 14, 24) est logée avec un jeu tel que, lorsque le tube subit un cintrage ou une flexion de toute autre manière, la fibre optique ou chaque fibre optique peut se déplacer librement dans une mesure limitée, transversalement au tube et par rapport à ce tube, caractérisé en ce que le tube flexible de l'élément formant fibre optique est une structure en matière plastique continue dans le sens longitudinal et a acquis lors de son durcissement une élasticité telle que l'axe longitudinal central du tube suit un trajet qui s'étend dans le sens longitudinal et qui présente des ondulations (8, 18, 28) de courbure régulière dont les axes de courbure sont parallèles les uns aux autres et sont sensiblement perpendiculaires à l'axe longitudinal du tube et dont les rayons de courbure sont sensiblement plus grands que la dimension transversale maximale du tube, l'agencement étant tel que, quand le tube en matière plastique ayant durci de façon élastique est soumis à une force de traction appliquée dans le sens longitudinal, le tube prend une forme droite dans la direction longitudinale à l'encontre de l'action de son élasticité en réduisant ainsi la force de traction appliquée à la fibre optique ou à chaque fibre optique et, lorsque la force de traction cesse d'être appliquée, le tube revient, sous l'action de son élasticité, vers sa forme initiale.

2. Conducteur électrique aérien flexible selon la revendication 1, caractérisé en ce que le tube flexible (17) de l'élément formant fibre optique a une section transversale non circulaire et que l'épaisseur de la paroi du tube est sensiblement constante à l'endroit de toutes les sections transversales de ce tube.

3. Conducteur électrique aérien flexible selon la revendication 1, caractérisé en ce que le tube flexible (17) de l'élément formant fibre optique a une section transversale de forme allongée comportant deux côtés principaux parallèles réunis par des extrémités de forme approximativement semi-circulaire, le tube flexible ayant durci de façon élastique en prenant une forme telle que les axes de courbure des ondulations (18) de courbure régulière sont sensiblement parallèles aux axes transversaux principaux du tube flexible.

4. Conducteur électrique aérien flexible selon l'une quelconque des revendications précédentes, caractérisé en ce que le tube flexible (7, 17) de l'élément formant fibre optique est formé de poly(téréphtalate d'éthylène) orienté.

5. Conducteur électrique aérien flexible selon l'une quelconque des revendications 1 à 3, caractérisé en ce que le tube flexible (7, 17) de l'élément formant fibre optique est formé de poly(éther-sulfone) ou de poly(éther-imide).

6. Conducteur électrique aérien flexible selon l'une quelconque des revendications 1 à 3, caractérisé en ce que dans le tube flexible (27) de l'élément formant fibre optique est noyée, dans la paroi du tube à des endroits mutuellement espacés, une pluralité d'éléments de renforcement allongés et élastiques (25) dont chacun a durci élastiquement de manière telle que l'axe longitudinal central du tube suit le trajet des ondulations de courbure régulière.

7. Conducteur électrique aérien flexible selon l'une quelconque des revendications précédentes, caractérisé en ce que la fibre optique ou chaque fibre optique (4) logée avec du jeu dans le tube flexible (7) qui a durci de façon élastique et que comporte l'élément formant fibre optique n'est pas supportée.

8. Conducteur électrique aérien flexible selon l'une quelconque des revendications 1 à 6, caractérisé en ce que deux ou plus de deux fibres optiques (14, 24) sont des parties constitutives d'au moins une structure en ruban (12, 22) de fibres optiques logée avec du jeu dans le canal central du tube flexible qui a durci de façon élastique et que comporte l'élément formant fibre optique.

9. Conducteur électrique aérien flexible selon la revendication 8, caractérisé en ce que la structure en ruban de fibres optiques ou chaque structure en ruban de fibres optiques que comporte l'élément formant fibre optique comprend deux ou plus de deux fibres optiques et un ou plus d'un élément de renforcement allongés flexibles disposés côte à côte et noyés entièrement ou partiellement dans un corps allongé flexible de matière plastique ou disposés côte à côte et fixés à une surface principale d'un ruban flexible.

10. Conducteur électrique aérien flexible selon l'une quelconque des revendications précédentes, caractérisé en ce que le compartiment allongé est le canal central d'un noyau central sensiblement rigide dans le sens circonférenciel (41, 51, 61, 71) qui est entouré par la ou les couche(s) (45, 55, 65, 75) d'éléments allongés, enroulés hélicoïdalement, en métal ou en alliage de métaux.

11. Conducteur électrique aérien flexible selon la revendication 10, caractérisé en ce que le noyau central est constitué par un seul élément allongé extrudé comportant un canal central qui constitue le compartiment allongé.

12. Conducteur électrique aérien flexible selon la revendication 10, caractérisé en ce que le noyau central (41) est un seul élément allongé (42) en métal ou en alliage de métaux ayant une section transversale sensiblement en forme de U, l'espace (46) entre les ailes et la base du U constituant le compartiment allongé.

13. Conducteur électrique aérien flexible selon la revendication 12, caractérisé en ce qu'une seule ou chacune des ailes du U (52, 62) est pliée vers l'intérieur de telle sorte que l'intervalle entre les extrémités libres des branches est au moins partiellement fermé.

14. Conducteur électrique aérien flexible selon la revendication 10, caractérisé en ce que le noyau central est un ruban de métal ou d'alliage de métaux qui s'étend dans le sens longitudinal et qui est plié transversalement de manière à former un tube, les bords en butée du ruban qui s'étendent dans le sens longitudinal étant soudés ou fixés de tout autre manière ensemble.

15. Conducteur électrique aérien flexible selon la revendication 10, caractérisé en ce que le noyau central (71) consiste en deux parties formées séparément et comprenant un élément allongé intérieur plein (72) en métal ou en alliage de métaux comportant dans sa surface extérieure au moins un évidement (76) s'étendant dans le sens longitudinal et, entourant l'élément allongé intérieur, un ruban en métal ou en alliage de métaux plié dans le sens transversal et appliqué dans le sens longitudinal, ce ruban recouvrant l'évidement ou chaque évidement s'étendant dans le sens longitudinal de manière à former un compartiment allongé.

16. Conducteur électrique aérien flexible selon l'une quelconque des revendications 10 à 15, caractérisé en ce que le noyau central (41, 51, 61, 71) a une section transversale sensiblement circulaire.

Fig.1.

Fig.2.

Fig.3.

Fig.4.

Fig.5.

Fig.6.

Fig.7.